# EUROPEAN PATENT APPLICATION

(11) **EP 0 684 068 A2**
(43) Date of publication of application: **29.11.1995**
(21) Application number: 95303461.8
(22) Date of filing: 23.05.1995
(51) Int. Cl.: B01D 69/04, B01D 67/00, B01D 69/10, B29C 53/48, B29C 65/02, B01D 63/06

(54) **Tubular filtration membrane, apparatus and method for making same**

(30) Priority: 25.05.1994 GB 9410429
(71) Applicant: PCI MEMBRANE SYSTEMS LIMITED, Hampshire RG28 7NR (GB)
(72) Inventor: Perrett, Kenneth, Winchester, Hampshire S023 7DE (GB); Farmer, John, Ashe, Hampshire, RG25 3AE (GB)
(74) Representative: Johnson, Terence Leslie

(57) **Abstract**

The invention relates to a membrane tube 1 comprising a tubular substrate 2 and a membrane layer 3 thereon, the substrate 2 having a substantially longitudinal seam 4.

The substrate 2 is a single ply polyester, formed from a tape 5 which is slit to a desired width so that when it is formed it forms a tube of a desired outside diameter, preferably from 3mm and upwards.

The membrane layer 3 is applied to the interior surface of the tube 2 in a viscous dope, which is subsequently set to a gel to form a plastic membrane layer. The viscous dope can be a polymer such as a polysulphone.

## Description

The invention relates to filtration, particularly to filtration using tubular membranes.

Such membranes are used in filtration to separate constituents of fluids, for example by reverse osmosis, nanofiltration, ultrafiltration and microfiltration. In all those filtration techniques, the fluid, for example a liquid, flows tangentially to a membrane surface thereby inhibiting the formation of deposits. The membrane itself retains dissolved and suspended solids while liquid from which they are separated passes through the membrane to form a permeate or filtrate, the retained fraction being known as the concentrate or retentate. Pressures involved range from 5 - 15 Bar for ultra-filtration and 10 - 20 Bar for Nanofiltration. Several benefits arise from the use of a small tube. The smaller the tube size the greater the packing density resulting in a greater surface area of membrane for a given module diameter. Changes in the fluid mechanics with tube diameter reduction result in likely energy savings.

However, as tube diameter is reduced the ratio of the wall thickness to the diameter reduces. The force that is required to bend the tube to the required cylindrical formation and hence the stress increases as the diameter decreases.

This stress increase can lead to failure of the tubes because the tubes may not have the desired quality, roundness, straightness and strength.

It is accordingly an object of the invention to seek to mitigate these disadvantages.

According to a first aspect of the invention there is provided a membrane tube comprising a tubular substrate and a membrane layer thereon, the substrate having a substantially longitudinal seam.

The substrate may comprise a single ply strip material formed to a tube with facing edges secured together to provide the longitudinal seam. This provides a relatively simple construction.

The facing edges may be overlapping and may be welded to provide the seam, and particularly the weld may be provided by ultrasonic welding. This provides a relatively simple way of constructing the tube.

The substrate may comprise a precut tape material. The tape material may comprise non-woven polyester material. This a particularly suitable material for filtration.

The membrane layer may be carried by an interior surface of the tubular substrate. This provides for protecting the layer. The substrate may comprise a multi-ply strip material.

The substrate may comprise a double ply strip material.

The weld may be within the boundary of the thickness of the overlapped material of the substrate. This provides for a smooth surface to which the membrane layer can adhere.

According to a second aspect of the invention there is provided a membrane filtration module, comprising a plurality of membrane tubes as hereinbefore defined, arranged in a bundle.

According to a third aspect of the invention there is provided apparatus for making a membrane tube, comprising means to form substrate material to a tube, means to secure overlapping edges of the substrate material to provide a tube with a longitudinal seam, and means to supply a membrane layer to the tube.

The flexible substrate material may comprise a tape mounted on a dispenser means. This provides a relatively simple construction, particularly where the dispenser means may comprise a reel for the tape.

The forming means may comprise a guide adapted to bring opposite edges of the tape into overlapping relationship whereby to form a tube. This provides for a continuous formation of a tube from a flat tape.

The forming means may provide a heatable preforming means and a main former. This provides for adequate control of a tube forming step.

The preforming means may form the tape into a curved formation and the main former may be adapted to form the curved formation into a cylindrical formation. This again provides for control of the forming as a gradual process is involved.

The means to form the membrane layer may comprise a hollow mandrel positioned interiorly of the tube. This is a relatively efficient way of applying the membrane material.

The hollow mandrel may comprise a floating bob, the membrane material passing through the mandrel and over the bob to coat the inside of the tube. This provides for centralising of the bob automatically in use so that an even layer of membrane material is applied.

The main former may comprise guides to maintain the overlapped opposite edges in a desired position relative to one another. This provides for control of the tube positioning operation.

The guides may be adjustable in position. This provides for adjustment of the degree of overlap, and provides positioning of overlap under the forming means.

The main former may include means to flatten a formed seam. This again provides for a smooth seam, so providing a smooth surface of the membrane material.

The forming means may comprise a welding means, particularly an ultrasonic welding means, such as an ultrasonic "horn" for welding. This provides a relatively simple and controllable apparatus. There may be a cooling bath wherein the membrane material gels to provide the membrane layer of the membrane tube.

There may also be means to cut a formed membrane to a required length.

The cooling bath may comprise a water bath, which may be at 2-3°C to provide proper cooling of the material.

The water bath may be formed substantially vertically below the forming means. This provides for automation of the apparatus.

According to a fourth aspect of the invention there is provided a method of making a membrane tube, comprising providing a flexible elongate substrate material, providing a membrane material, forming the substrate material into a tube by securing overlapping edges with a longitudinal seam, applying the membrane material to the tube, and setting the membrane material to provide a membrane layer.

The method may comprise passing a formed membrane tube substantially vertically into a cooling means to set the membrane material. This again provides for an automated method.

The method may comprise the step of cutting a formed membrane tube to a required length. The step may be carried out after the formed tube has passed into the cooling bath.

The securing step may comprise a welding step, particularly an ultrasonic welding step. This provides a relatively simple and yet controllable step.

The method may comprise preheating and preforming the substrate material prior to the welding step. This ensures that the tube is properly formed prior to the welding.

A membrane tube, and apparatus and method for making same, are diagrammatically illustrated, by way of example, with reference to the accompanying drawings.
Figure 1 is a transverse sectional view of a tubular membrane tube according to the invention;
Figure 2 is a schematic side elevational view of a bundle of membrane tubes of Figure 1; and
Figure 3 is a schematic elevational view of apparatus according to the invention for making a membrane tube according to Figure 1.

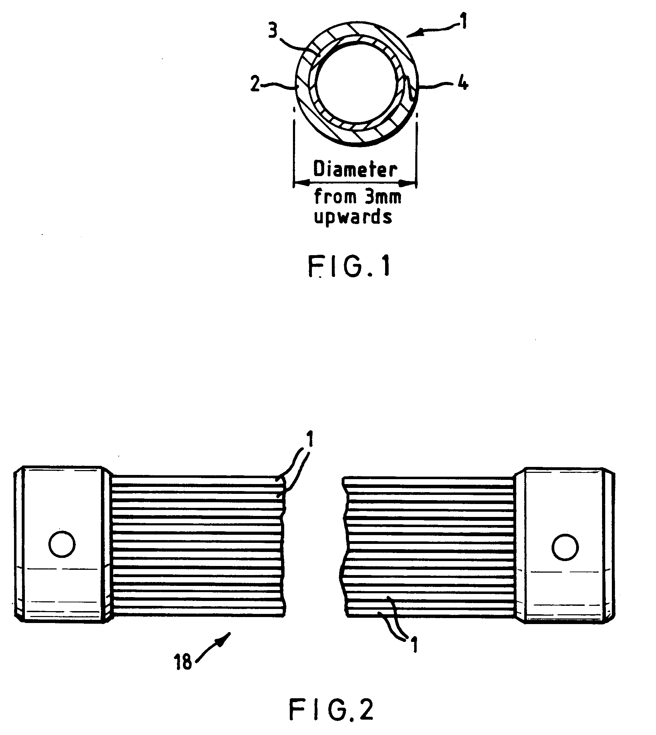

Referring to the drawings, there is shown in Figure 1 a membrane tube 1 comprising a tubular substrate 2 and a membrane layer 3 thereon, the substrate 2 having a substantially longitudinal seam 4.

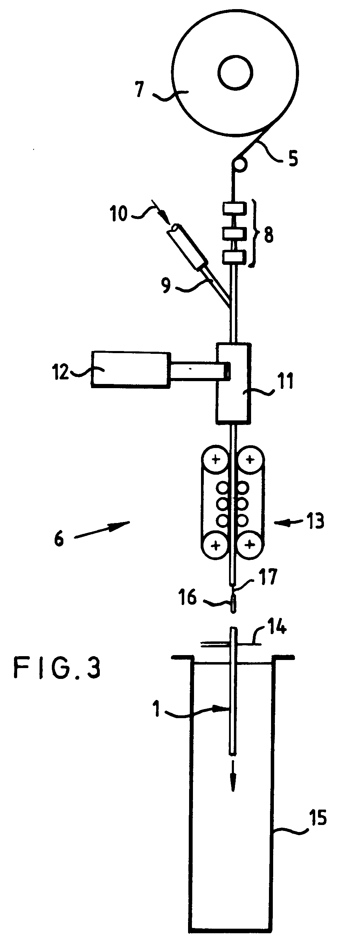

In the embodiment shown, the substrate 2 is a single ply polyester, formed from a tape 5 (Figure 3) which is slit to a desired width so that when it is formed it forms a tube of a desired outside diameter, preferably from 3mm and upwards.

The membrane material 3 is applied to the interior surface of the tube 2 in a viscous dope, which is subsequently set to a gel to form a plastic membrane layer. The viscous dope can be a polymer such as a polysulphone.

The tubular membrane tube 1 is formed in an apparatus 6 of the kind shown in Figure 3. There is in series a tape 5 reel, 7 and a forming means in the form of a heated pre-former having three parts 8 in the embodiment. A hollow mandrel 9 into which the dope is passed from a source 10 is downstream of the preformers 8 and passes through a main former 11 comprising part of the forming means 6 and which has a seam forming member in the form of, in the embodiment, an ultrasonic welding unit 12. Downstream of the main former 11 there is a take-off arrangement 13 comprising a pair of opposed endless belts, and downstream thereof, a cutting means 14 such as a knife which can cut the formed membrane assembly 1 to a desired length after it passes to a cooling or gel forming means in the form of a water bath 15.

In operation using the method of the invention in the apparatus 6, the flexible tape 5 substrate strip is fed off the reel 7 through the heated preformers 8 where the edges are turned towards each other to form a trough in which the hollow mandrel 9 is received. The trough then passes through the main former 11 where the edges are overlapped longitudinally and are secured together to form the longitudinal seam by the ultrasonic welding unit 12. The formed tube 2 is drawn out of the former by the take off mechanism 13 and as it comes off the mandrel 9 the membrane material is applied as a viscous dope to the interior surface of the tube 1 via a hanging bob 16 which is attached to the mandrel by a flexible connection such as a line 17 and is therefore self-centering and therefore always applies the dope evenly to the interior surfaces of the tube 2. It will be understood that the diameters of the mandrel 9 and the bob 16 which is of "torpedo" shape, are determined to ensure that a membrane layer 3 of the correct thickness is deposited. The membrane material passes through the hollow mandrel and over the bob, to effect coating of the inner surface of the tube.

The preheating of the tape 5, by the heated preformers essentially anneals the tape and relieves inherent stress, so that when it is subsequently folded to a tube and seam welded, those inherent stresses being relieved, do not distort the tubular formation, impair the strength, or provide residual stresses which would cause the membrane layer to crack and flake or peel off, so reducing the quality of the formed tube. Stated in another way, in the invention induced stresses are reduced to a minimum before the tape is welded, to obtain the optimum quality tube possible.

The membrane tube 1 is passed straight into the water bath 15 to cool the dope to a gel and is cut to the desired length by the cutting means 14. The whole apparatus 6 is as shown substantially vertically orientated so that the whole method of production can be automated, the tape 5 being fed from the reel, through the various forming stages directly into the bath 15 to produce a finished membrane tube. There is a counter associated with the cutting means 14, for facilitating making batches of say 150 lengths of tube 1.

It is because the formed tube 1 is not rotating when it comes from the main former 11 that it can be driven directly into the water bath 15.

It will be understood too that the main former 11 may have adjustable tape guides to maintain the edges of the tape 5 in the correct desired position. The overlapping of the edges ensures a full longitudinal seam 4 which is no thicker than the thickness of the tube wall, owing to consistent overlap, which is achieved by a tube forming die so arranged on the main former 11 that the overlap of the edges is precisely positioned under the head of the ultrasonic welding unit 12 thereby providing a sound seam.

The main former 11 also has means to flatten the seam so providing a stronger seam by forcing the tape edges together while the joint is still hot.

The mandrel 9 is longitudinally shaped so that heat from the pre-forming operation does not heat the membrane dope material and thus thereby avoids the need for mandrel cooling. There is also the ability to provide a varying sectional profile so that the seam welded tube can be stretched to a rounder shape after welding.

It will be understood too that the apparatus 6 can be arranged substantially horizontally rather than substantially vertically as shown.

In either case the water bath 15 is at 2-3°C to gel the membrane layer 3 which is a macro molecular layer.

The main former 11 essentially creates the desired overlap, which is adjustable by adjustability of the former to hold the overlap for welding to form the longitudinal seams 4, which provides no ridges inside or out, so providing a smooth surface for the membrane dope material which is therefore applied evenly to the inside of the tube and therefore cracking is unlikely.

The apparatus may also include forming means to straighten the tube after passing from the main former, or to provide a different cross-sectional configuration from the circular one shown.

Small tubular membrane tubes embodying the invention and as hereinbefore described provide higher packing density in a bundle in a module 18 as shown in Figure 2, allow a smaller plant footprint, or area required, provide that a higher operating pressure can be used compared with other small membrane types, while the ability to automate the method and apparatus results in lower production costs. The membrane tubes 1 so produced can be used as an ultra-filtration membrane, a micro-filtration membrane, and a nano-filtration membrane. Using the annealing method described, tubes of 2 - 3 mm diameter can be produced, which are non-woven and suitably single-ply and capable of withstanding operating pressures of 15 - 20 Bar. This is in contrast to known tubes which are either spirally wound and have a minimum size of 6mm and have "proud" seams reducing packing density, or "fat" fibres which can only usually operate at a maximum pressure of 1 - 3 Bar.

## Claims

1. A membrane tube, characterised by a tubular substrate (2) and a membrane layer (3) thereon, and by the substrate having a substantially longitudinal seam (4).

2. A membrane tube according to Claim 1, characterised by the substrate (2) comprising a single ply strip material formed to a tube with facing edges secured together to provide the longitudinal seam (4).

3. A membrane tube according to Claim 2, characterised by the facing edges overlapping and being welded to provide the seam (4), preferably by ultrasonic welding.

4. A membrane tube according to any preceding claim, characterised by the substrate (2) comprising a precut tape material, preferably a non-woven polyester material.

5. A membrane tube according to any preceding claim, characterised by the membrane layer (3) being carried by an interior surface of the tubular substrate, and preferably by the substrate comprising a multi-ply strip material, such as a double ply strip material.

6. A membrane tube according to any of Claim 3 to 5, characterised by the weld (4) being within the boundary of the thickness of the overlapped material of the substrate (2).

7. A membrane filtration module, characterised by a plurality of membrane tubes according to any preceding Claim, arranged in a bundle.

8. Apparatus for making a membrane tube, characterised by means (6) to form a flexible substrate material to a tube, by means (12) to secure overlapping edges of the substrate material to provide a tube with a longitudinal seam (4), and by means (9, 16) to apply a membrane layer (3) to the tube.

9. Apparatus according to Claim 8, characterised by the flexible substrate material comprising a tape (5) mounted on a dispenser means, preferably comprising a reel (7).

10. Apparatus according to any of Claims 8 to 9, characterised by the forming means (6) comprising a guide adapted to bring opposite edges of the tape into overlapping relationship whereby to form a tube.

11. Apparatus according to Claim 10, characterised by the forming means (8) providing a heatable preforming means (8), and by a main former (11).

12. Apparatus according to Claim 11, characterised by the preforming means (8) forming the tape into a curved formation and by the main former (11) being adapted to form the curved formation into a cylindrical formation.

13. Apparatus according to Claim 12, characterised by the means to form the membrane layer comprising a hollow mandrel (9) positioned internally of the tube.

14. Apparatus according to Claim 13, characterised by the hollow mandrel (9) comprising a floating bob (16), and by the membrane material passing through the mandrel and over the bob (16), to coat the inside of the tube.

15. Apparatus according to any of Claims 11 to 14, characterised by the main former (11) comprising guides, preferably adjustable in position, to maintain the overlapped opposite edges in a desired position relative to one another.

16. Apparatus according to any of Claims 11 to 15, characterised by the main former including means to flatten a formed seam.

17. Apparatus according to any of Claims 10 to 16, characterised by the forming means (6) comprising a welding means, preferably comprising an ultrasonic welding means.

18. Apparatus according to any of Claims 8 to 17, characterised by a cooling bath (15), preferably a water bath, wherein the membrane material gels to provide the membrane layer of the membrane tube.

19. Apparatus according to Claim 18, characterised by means (14) to cut a formed membrane tube to a required length.

20. Apparatus according to any of Claims 18 to 19, characterised by the water bath (15) being positioned substantially vertically below the forming means.

21. A method of making a membrane tube, characterised by providing a flexible elongate substrate material, by providing a membrane material, by forming the substrate material into a tube by securing overlapping edges with a longitudinal seam, by applying the membrane material to the tube, and by setting the membrane material to provide a membrane layer.

22. A method according to Claim 21, characterised by passing a formed membrane tube substantially vertically into a cooling means to set the membrane

23. A method according to Claim 22, characterised by the step of cutting a formed membrane tube to a required length.

24. A method according to any of Claims 21 to 23, characterised by the securing step comprising a welding step, preferably an ultrasonic welding strip.

25. A method according to Claim 24, characterised by preheating and preforming the substrate material prior to the welding step.
